# EUROPEAN PATENT APPLICATION

(11) **EP 4 546 125 A1**
(43) Date of publication of application: **30.04.2025**
(21) Application number: 23876316.3
(22) Date of filing: 11.08.2023
(51) Int. Cl.: G06F 9/451

(54) **INTERFACE RENDERING METHOD AND ELECTRONIC DEVICE**

(30) Priority: 14.10.2022 CN 202211263276
(71) Applicant: Huawei Technologies Co., Ltd., Shenzhen, Guangdong 518129 (CN)
(72) Inventor: ZHOU, Huan, Shenzhen, Guangdong 518129 (CN); YAO, Jian, Shenzhen, Guangdong 518129 (CN); LI, Danjing, Shenzhen, Guangdong 518129 (CN); ZHOU, Zhenkun, Shenzhen, Guangdong 518129 (CN)
(74) Representative: Pfenning, Meinig & Partner mbB
(86) International application number: PCT/CN2023/112427
(87) International publication number: WO 2024/078111

(57) **Abstract**

Embodiments of this application provide an interface rendering method and an electronic device. The method includes: determining a plurality of target regions that are on a target interface and that correspond to a plurality of change controls, where the change control includes a control that changes in a next frame of the target interface relative to a current frame, and the target region is a minimum bounding rectangular region of a region occupied by the change control on the target interface; rendering and drawing a plurality of groups of target controls to obtain a rendering and drawing result, where the target control includes a control that is in the current frame and that intersects the target region; and rendering and drawing the plurality of groups of target controls on the target interface based on the rendering and drawing result, to obtain the next frame. In this way, a control that intersects each target region corresponding to each change control is redrawn, thereby reducing redundant drawing of the control and unnecessary resource overheads, reducing load and power consumption of the device, and improving user experience.

## Description

This application claims priority to Chinese Patent Application No. 202211263276.X, filed with the China National Intellectual Property Administration on October 14, 2022 and entitled "INTERFACE RENDERING METHOD AND ELECTRONIC DEVICE", which is incorporated herein by reference in its entirety.

### TECHNICAL FIELD

Embodiments of this application relate to the field of graphics processing, and more specifically, to an interface rendering method and an electronic device.

### BACKGROUND

To meet requirements of internet applications, systems are continuously optimized for various electronic devices to reduce power consumption. For the electronic device, 2D graphics display consumes most power. The 2D graphics display involves rendering, composition, and display refreshing of a user interface (user interface, UI) control.

Usually, in a 2D graphics display process, the power consumption of the electronic device may be reduced by optimizing a drawing and rendering process. For example, based on a partial refresh technology, content that changes in a part of a region between two consecutive frames in a time sequence is redrawn. However, the partial refresh technology causes redundant drawing of the UI control in a partial region, thereby causing unnecessary resource overheads of the electronic device, increasing load of the electronic device, and causing poor user experience.

### SUMMARY

Embodiments of this application provide an interface rendering method and an electronic device, to reduce redundant drawing of a control and unnecessary resource overheads, thereby reducing load and power consumption of the electronic device and improving user experience.

According to a first aspect, an interface rendering method is provided. The method includes: determining a plurality of target regions that are on a target interface and that correspond to a plurality of change controls, where the change control includes a control that changes in a next frame of the target interface relative to a current frame, and the target region is a minimum bounding rectangular region of a region occupied by the change control on the target interface; rendering and drawing a plurality of groups of target controls to obtain a rendering and drawing result, where the target control includes a control that is in the current frame and that intersects the target region; and rendering and drawing the plurality of groups of target controls on the target interface based on the rendering and drawing result, to obtain the next frame.

In the foregoing technical solution, each target region corresponding to each change control is determined based on each change control in the next frame of the target interface relative to the current frame, and the control that intersects each target region is redrawn on the target interface. In this way, in a process of rendering the next frame, in this technical solution, it is unnecessary to use a minimum bounding rectangle of the plurality of target regions as a large target region, and render all controls in the large target region. In this technical solution, only the control that intersects each target region corresponding to each change control needs to be rendered, thereby reducing redundant drawing of the control and unnecessary resource overheads, further reducing load and power consumption of the electronic device, and improving user experience.

With reference to the first aspect, in some implementations of the first aspect, a sum of areas of the plurality of target regions is not equal to an area of a common region, and the common region is a minimum bounding rectangular region of a region occupied by the plurality of change controls on the target interface.

With reference to the first aspect, in some implementations of the first aspect, the sum of the areas of the plurality of target regions is less than an area of the target interface.

With reference to the first aspect, in some implementations of the first aspect, the rendering and drawing a plurality of groups of target controls includes: when a sum of areas of the plurality of target regions is less than a first threshold, rendering and drawing the plurality of groups of target controls.

With reference to the first aspect, in some implementations of the first aspect, the rendering and drawing a plurality of groups of target controls includes: when no coincident boundary exists in the plurality of target regions, rendering and drawing the plurality of groups of target controls.

With reference to the first aspect, in some implementations of the first aspect, one group of target controls includes one or more target controls.

With reference to the first aspect, in some implementations of the first aspect, the target control includes a control that is in the current frame and that intersects a target region obtained through removing, and before the rendering and drawing a plurality of groups of target controls to obtain a rendering and drawing result, the method further includes: removing a same target region from the plurality of target regions.

A duplicate target region (a same target region) is removed from the plurality of target regions. In this way, it can be ensured that the collected target regions are unique and do not intersect each other.

According to a second aspect, an electronic device is provided. The electronic device includes a central processing unit CPU, and the CPU is configured to: determine a plurality of target regions that are on a target interface and that correspond to a plurality of change controls, where the change control includes a control that changes in a next frame of the target interface relative to a current frame, and the target region is a minimum bounding rectangular region of a region occupied by the change control on the target interface; and render and draw a plurality of groups of target controls to obtain a rendering and drawing result, where the target control includes a control that is in the current frame and that intersects the target region.

With reference to the second aspect, in some implementations of the second aspect, the electronic device further includes a graphics processing unit GPU; the CPU is further configured to send the rendering and drawing result to the GPU; and the GPU is configured to render and draw the plurality of groups of target controls on the target interface based on the rendering and drawing result, to obtain the next frame.

With reference to the second aspect, in some implementations of the second aspect, a sum of areas of the plurality of target regions is not equal to an area of a common region, and the common region is a minimum bounding rectangular region of a region occupied by the plurality of change controls on the target interface.

With reference to the second aspect, in some implementations of the second aspect, the sum of the areas of the plurality of target regions is less than an area of the target interface.

With reference to the second aspect, in some implementations of the second aspect, the rendering unit is further specifically configured to: when a sum of areas of the plurality of target regions is less than a first threshold, render and draw the plurality of groups of target controls.

With reference to the second aspect, in some implementations of the second aspect, one group of target controls includes one or more target controls.

With reference to the second aspect, in some implementations of the second aspect, the target control includes a control that is in the current frame and that intersects a target region obtained through removing, and the CPU is further configured to: remove a same target region from the plurality of target regions.

For technical effect of the second aspect and the possible implementations, refer to the related descriptions of the first aspect. Details are not described herein again.

According to a third aspect, an interface rendering apparatus is provided. The apparatus includes: a determining unit, configured to determine a plurality of target regions that are on a target interface and that correspond to a plurality of change controls, where the change control includes a control that changes in a next frame of the target interface relative to a current frame, and the target region is a minimum bounding rectangular region of a region occupied by the change control on the target interface; and a rendering unit, configured to render and draw a plurality of groups of target controls to obtain a rendering and drawing result, where the target control includes a control that is in the current frame and that intersects the target region, where the rendering unit is further configured to render and draw the plurality of groups of target controls on the target interface based on the rendering and drawing result, to obtain the next frame.

For example, the interface rendering apparatus may be an electronic device, or a chip or a circuit of the electronic device. This is not limited in this application.

With reference to the third aspect, in some implementations of the third aspect, a sum of areas of the plurality of target regions is not equal to an area of a common region, and the common region is a minimum bounding rectangular region of a region occupied by the plurality of change controls on the target interface.

With reference to the third aspect, in some implementations of the third aspect, the sum of the areas of the plurality of target regions is less than an area of the target interface.

With reference to the third aspect, in some implementations of the third aspect, the rendering unit is further specifically configured to: when a sum of areas of the plurality of target regions is less than a first threshold, render and draw the plurality of groups of target controls.

With reference to the third aspect, in some implementations of the third aspect, one group of target controls includes one or more target controls.

For technical effect of the third aspect and the possible implementations, refer to the related descriptions of the first aspect. Details are not described herein again.

According to a fourth aspect, an electronic device is provided, including a processor, configured to execute a computer program stored in a memory, to enable the electronic device to perform the method according to the first aspect and any one of the implementations of the first aspect.

With reference to the fourth aspect, in some implementations of the fourth aspect, the electronic device further includes the memory and/or a communication interface, the communication interface is coupled to the processor, and the communication interface is configured to input and/or output information.

According to a fifth aspect, a computer-readable storage medium is provided. The computer-readable storage medium stores a computer program, and when the computer program is run on a computer, the computer is enabled to perform the method according to the first aspect and any one of the implementations of the first aspect.

According to a sixth aspect, a chip is provided, including at least one processor and an interface circuit. The interface circuit is configured to provide program instructions or data for the at least one processor, and the at least one processor is configured to execute the program instructions, to implement the method according to the first aspect and any one of the implementations of the first aspect.

According to a seventh aspect, a computer program product is provided. The computer program product includes instructions for performing the method according to the first aspect and any one of the implementations of the first aspect.

### BRIEF DESCRIPTION OF DRAWINGS

FIG. 1 is a diagram of a structure of an example of an electronic device according to an embodiment of this application;
FIG. 2 is a block diagram of a software structure of an example of an electronic device according to an embodiment of this application;
FIG. 3 is a diagram of an example of a GUI of an application according to an embodiment of this application;
FIG. 4 is a diagram of a control tree corresponding to the GUI shown in FIG. 3;
FIG. 5 is a diagram of an example of a GUI of an application according to an embodiment of this application;
FIG. 6 is a diagram of a control tree and a decision tree corresponding to the GUI shown in FIG. 5;
FIG. 7 is an example flowchart of an interface rendering method according to an embodiment of this application;
FIG. 8 is a diagram of a control tree corresponding to the GUI shown in FIG. 5;
FIG. 9 is a diagram of a structure of an example of an electronic device according to an embodiment of this application; and
FIG. 10 is a diagram of a structure of another example of an electronic device according to an embodiment of this application.

### DESCRIPTION OF EMBODIMENTS

The following describes technical solutions of embodiments of this application with reference to accompanying drawings.

In descriptions of embodiments of this application, unless otherwise specified, "/" means "or". For example, A/B may indicate A or B. A term "and/or" in this specification is merely an association relationship for describing associated objects, and indicates that three relationships may exist. For example, A and/or B may indicate the following three cases: Only A exists, both A and B exist, and only B exists. In addition, in the descriptions of embodiments of this application, "multiple" or "a plurality of" means two or more.

Terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

The electronic device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (for example, a Bluetooth headset or a smartwatch), a home device (for example, a smart lock or a smart peephole), a terminal device in a future 5G network, a terminal device in a future evolved public land mobile network (public land mobile network, PLMN), or the like. This is not limited in embodiments of this application.

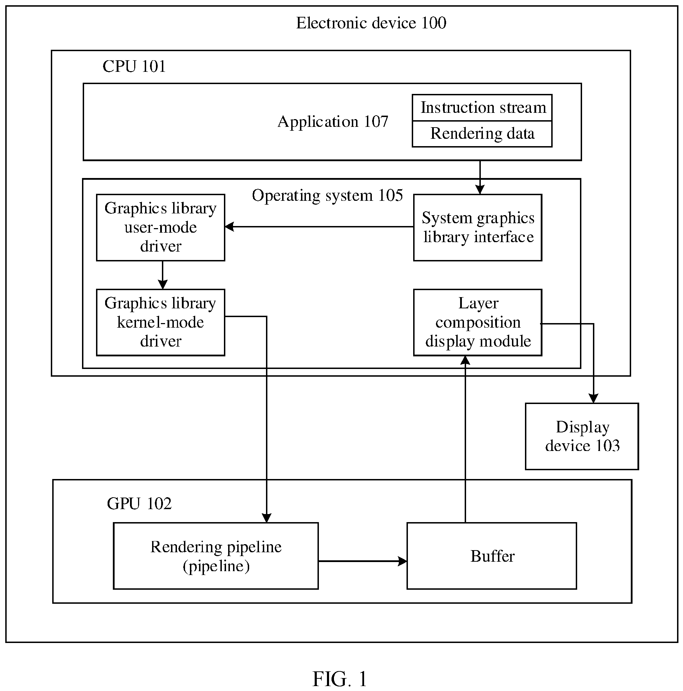

For example, FIG. 1 is a diagram of a structure of an example of an electronic device 100 according to an embodiment of this application.

For example, as shown in FIG. 1, the electronic device 100 may include a central processing unit (central processing unit, CPU) 101, a graphics processing unit (graphics processing unit, GPU) 102, a display device 103, and a memory 104. Optionally, the electronic device 100 may further include at least one communication bus 110 (not shown in FIG. 1), configured to implement connection and communication between the components.

It should be understood that the components in the electronic device 100 may alternatively be coupled to each other via another connector, and the another connector may include various interfaces, transmission lines, buses, or the like. The components in the electronic device 100 may alternatively be connected in a radioactive manner by using the processor 101 as a center. In embodiments of this application, coupling refers to mutual electrical connection or communication, including direct connection or indirect connection via another device.

There are also a plurality of manners in which the CPU 101 and the GPU 102 are connected, which are not limited to the manner shown in FIG. 1. The CPU 101 and the GPU 102 in the electronic device 100 may be located on a same chip, or each may be an independent chip.

The following briefly describes functions of the CPU 101, the GPU 102, and the display device 103.

The CPU 101 is configured to run an operating system 105 and an application 107. The application 107 may be a graph-type application, for example, a game or a video player. The operating system 105 provides a system graphics library interface. The application 107 receives, through the system graphics library interface, an instruction stream (for example, a rendering instruction) that is used to render a graph or an image frame and that is sent by the application 107. A driver, for example, a graphics library user-mode driver and/or a graphics library kernel-mode driver, provided by the operating system 105, generates an instruction stream that can be identified by a rendering pipeline of the GPU 102 and required related rendering data. A system graphics library includes but is not limited to a system graphics library like an open graphics library for embedded systems (open graphics library for embedded systems, OpenGL ES), the Khronos platform graphics interface (the Khronos platform graphics interface), or Vulkan (a cross-platform drawing application programing interface). The instruction stream includes a series of instructions, and these instructions are usually instructions for invoking the system graphics library interface.

Optionally, the CPU 101 may include at least one of the following types of processors: an application processor, one or more microprocessors, a digital signal processor (digital signal processor, DSP), a microcontroller unit (microcontroller unit, MCU), an artificial intelligence processor, or the like.

The CPU 101 may further include a necessary hardware accelerator, for example, an application-specific integrated circuit (application-specific integrated circuit, ASIC), a field programmable gate array (field programmable gate array, FPGA), or an integrated circuit configured to implement a logical operation. The CPU 101 may be coupled to one or more data buses, and is configured to transmit data and instructions between the components in the electronic device 100.

The GPU 102 is configured to: receive a graphics instruction stream sent by the CPU 101, generate a rendering target by using the rendering pipeline (pipeline), and display the rendering target on the display device 103 by using a layer composition display module of the operating system.

Optionally, the GPU 102 may include a general-purpose GPU that executes software, for example, a GPU or another type of dedicated graphics processing unit.

The display device 103 is configured to display various images generated by the electronic device 100. The image may be a graphical user interface (graphical user interface, GUI) of the operating system or image data (including a static image and video data) processed by the GPU 102.

Optionally, the display device 103 may include any suitable type of display, for example, a liquid crystal display (liquid crystal display, LCD), a plasma display, or an organic light-emitting diode (organic light-emitting diode, OLED) display.

The rendering pipeline is a series of operations sequentially performed by the GPU 102 in a process of rendering a graph or image frame. Typical operations include vertex processing (vertex processing), primitive processing (primitive processing), rasterization (rasterization), fragment processing (fragment processing), and the like.

A software system of the electronic device 100 shown in FIG. 1 may use a layered architecture, an event-driven architecture, a microkernel architecture, a micro service architecture, or a cloud architecture.

The software system is not limited in embodiments of this application. For example, the software system may be an Android^{®} system, an iOS^{®} system, or a HarmonyOS^{®} system.

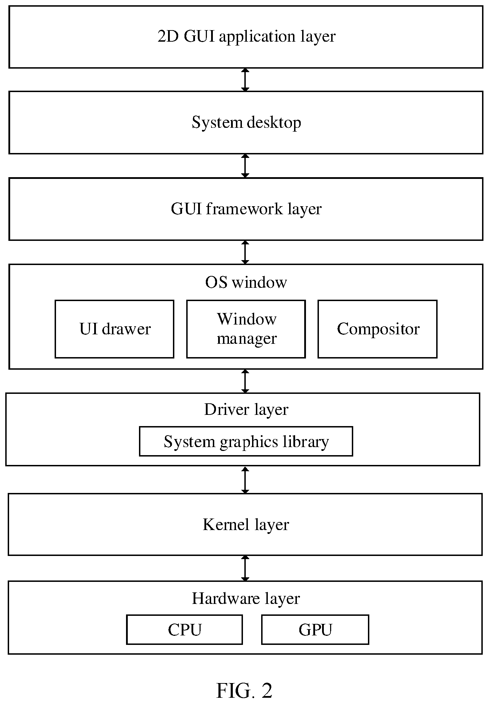

With reference to FIG. 2, the following uses a layered architecture system as an example to describe the software structure of the electronic device 100.

FIG. 2 is a block diagram of the software structure of the electronic device 100 according to an embodiment of this application. In the layered architecture, software is divided into several layers, and each layer has a clear role and task. The layers communicate with each other through software interfaces. As shown in FIG. 2, the software system is divided into seven layers: a 2D GUI application layer, a system desktop layer, a GUI framework layer, a system layer, a driver layer, a kernel layer, and a hardware layer from top to bottom.

The GUI framework layer provides a drawing interface for a UI control for use of the 2D GUI application layer. For example, the GUI framework layer may include a 2D rendering library, and the 2D rendering library is usually used together with a system image library of the driver layer. For example, the 2D rendering library may include Skia, Qt, or GTK.

The operating system (operating system, OS) window includes a plurality of functional modules. As shown in FIG. 2, the system layer includes a UI drawer, a window manager (window manager), and a compositor (compositor). The UI drawer is used to draw the UI control. The window manager is configured to manage a window program. For example, the window manager may obtain a size of a display. The compositor is configured to composite and display a UI control.

The driver layer is an interface layer for drawing a 2D image. The driver layer includes the system image library, and the system image library is configured to generate a drawing instruction. For example, the system image library may be an open graphics library (open graphics library, OpenGL) or Vulkan.

The kernel layer is a layer between hardware and software. The kernel layer may provide a driver of the electronic device 100, to implement communication between the system and various hardware. For example, the hardware may include components such as a display, a camera, a memory, a keyboard, a wireless network, an audio device, and a power supply.

The hardware layer may include a plurality of processors, for example, a CPU and a GPU shown in FIG. 2. The CPU may be configured to generate a rendering and drawing instruction, and send the generated rendering and drawing instruction to the GPU. The GPU is configured to execute the rendering and drawing instruction.

Structures of the electronic device 100 shown in FIG. 1 and FIG. 2 are merely examples, and shall not constitute a limitation on this application.

For ease of understanding of embodiments of this application, terms in embodiments of this application are described briefly first.

### 1. Rendering

Rendering (render) is a process of generating an image from a model by using software. The model is a description of a three-dimensional object or virtual scene strictly defined by using a language or a data structure, and includes information such as geometry, a viewpoint, a texture, lighting, and shadow.

### 2. User Interface (user interface, UI)

The UI may also be referred to as a man-machine interaction interface, and is mainly used for information exchange. A UI control is a component that forms the UI. For example, the UI control may include a button control, an input box control, a slider bar control, a GUI switching button control, a progress bar control, a status switch control, a text control, a vertical layout control, a horizontal layout control, a grid layout control, and the like.

It should be noted that, in embodiments of this application, the UI control is briefly referred to as a control.

### 3. Control tree

The control tree may also be referred to as a "window tree" or a "view tree" (view tree). The control tree includes a root node and at least one branch, each branch includes at least one intermediate node and a tail node, and a current node on each branch and a next node directly connected to the current node form parent and child nodes, that is, the current node is the parent node of the next node, the next node is the child node of the current node.

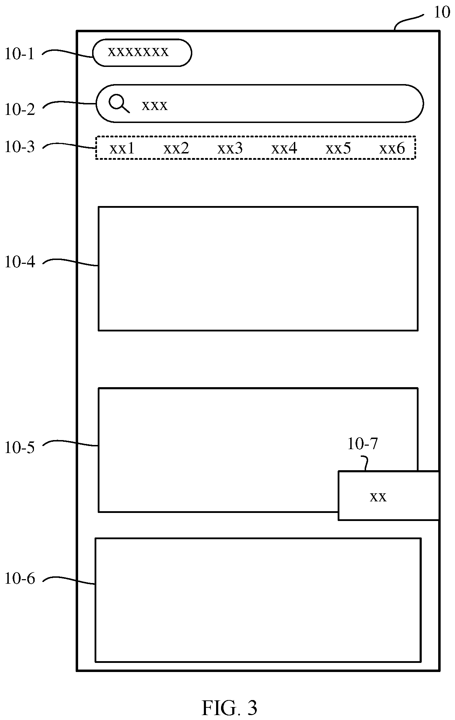

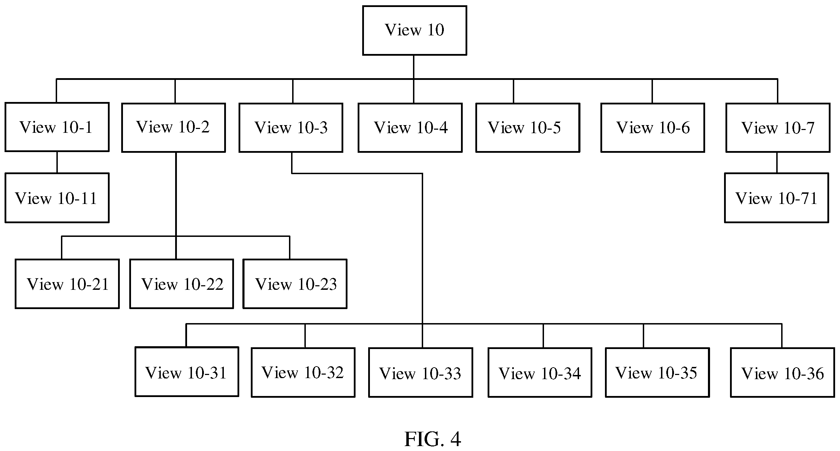

The following describes the control tree with reference to FIG. 3 and FIG. 4.

FIG. 3 is a diagram of an example of a GUI of an application. As shown in FIG. 3, a display interface 10 includes a first column 10-1, a search bar 10-2, a text column 10-3, a second column 10-4, a third column 10-5, a fourth column 10-6, and a fifth column 10-7. The first column 10-1 may further include text information "xxxxxxx". The search bar 10-2 may further include a search box, a search button, and text information "xxx". The text column 10-3 may further include six pieces of text, namely, "xx1", "xx2", "xx3", "xx4", "xx5", and "xx6". The fifth column 10-7 may further include text information "xx".

FIG. 4 is a diagram of a control tree corresponding to the GUI shown in FIG. 3. It can be learned from FIG. 3 that the display interface 10 shown in FIG. 3 is a bottom-layer control of the application. If the control tree is used for indication, as shown in FIG. 4, the display interface 10 may be a root node View 10, and the root node View 10 includes seven child nodes, namely, View 10-1 corresponding to the first column 10-1, View 10-2 corresponding to the search bar 10-2, View 10-3 corresponding to the text column 10-3, View 10-4 corresponding to the second column 10-4, View 10-5 corresponding to the third column 10-5, View 10-6 corresponding to the fourth column 10-6, and View 10-7 corresponding to the fifth column 10-7.

View 10-1 includes one child node: View 10-11 shown in FIG. 4. View 10-11 is a control corresponding to the text information "xxxxxxx" included in the first column 10-1.

View 10-2 includes three child nodes: View 10-21, View 10-22, and View 10-23 shown in FIG. 4. View 10-21 is a control corresponding to the search box included in the search bar 10-2, View 10-22 is a control corresponding to the search button included in the search bar 10-2, and View 10-23 is a control corresponding to the text information "xxx" included in the search bar 10-2.

View 10-3 includes six child nodes: View 10-31, View 10-32, View 10-33, View 10-34, View 10-35, and View 10-36 shown in FIG. 4. View 10-31 is a control corresponding to the text "xx1" included in the text column 10-3, View 10-32 is a control corresponding to the text "xx2" included in the text column 10-3, View 10-33 is a control corresponding to the text "xx3" included in the text column 10-3, View 10-34 is a control corresponding to the text "xx4" included in the text column 10-3, View 10-35 is a control corresponding to a title "xx5" included in the text column 10-3, and View 10-31 is a control corresponding to the text "xx6" included in the text column 10-3.

View 10-7 includes one child node: View 10-71 shown in FIG. 4. View 10-71 is a control corresponding to the text information "xx" included in the fifth column 10-7.

In most scenarios, a part of a region (which may be referred to as a dirty region) indicated between two consecutive frames in a time sequence changes, and needs to be redrawn.

One manner is to use a dirty region partial refresh mechanism, to only draw a region that changes in a next frame relative to a current frame, so as to implement rendering of the next frame.

Specifically, a large dirty region partial refresh manner is usually used. A minimum bounding rectangle of all dirty regions is used as a large dirty region, and the large dirty region is redrawn, thereby reducing redundant drawing of a control and reducing power consumption.

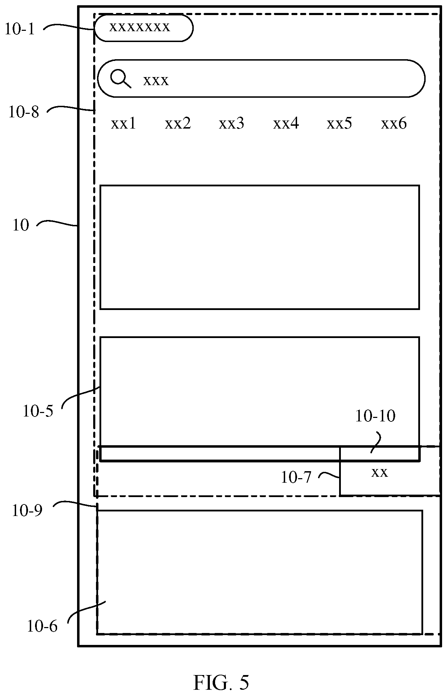

FIG. 5 shows an example of the GUI of the application. Content included in the GUI shown in FIG. 5 is the same as the content included in the GUI shown in FIG. 3. Details are not described herein again.

As shown in FIG. 5, the text information "xxxxxxx" in the first column 10-1 and the text information "xx" in the fifth column 10-7 change in the next frame, that is, a minimum bounding rectangular region of the first column 10-1 and a region corresponding to the fifth column 10-7 are dirty regions respectively. Based on the large dirty region partial refresh manner, a minimum bounding rectangular region of the region corresponding to the first column 10-1 and the region corresponding to the fifth column 10-7 is used as a large dirty region 10-8, and the large dirty region 10-8 is redrawn.

It can be learned that, in the dirty region partial refresh mechanism, some regions in the large dirty region do not change in the next frame relative to the current frame. However, in an interface rendering process of the next frame, the some areas are still redrawn. This causes a waste of resources.

The other manner is to use a bitmap buffer technology to implement rendering of the next frame.

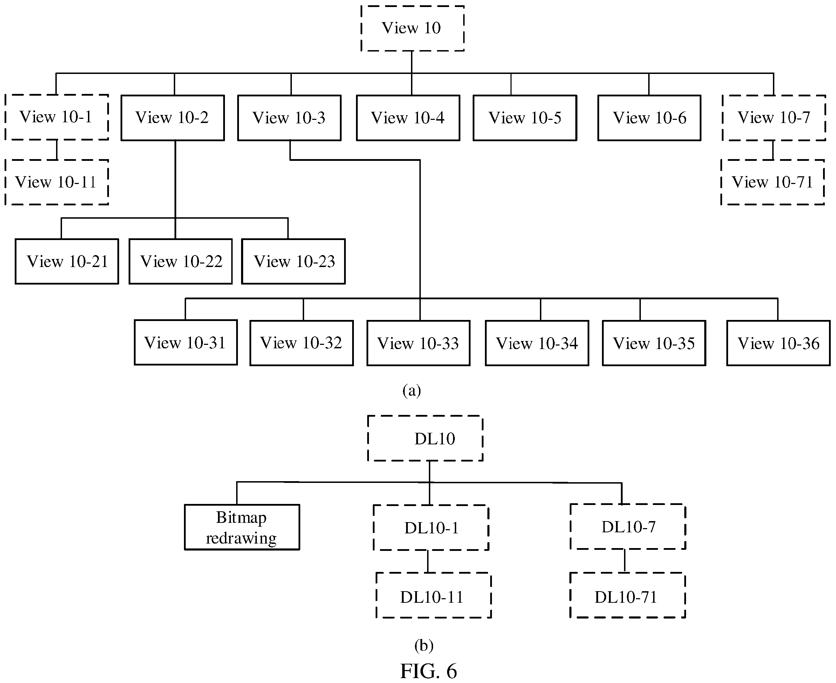

(a) in FIG. 6 shows a control tree corresponding to the GUI shown in FIG. 5. A structure of the control tree shown in FIG. 6 is the same as the structure of the control tree shown in FIG. 4. Details are not described herein again. A dashed-line box indicates a UI control that changes in the next frame relative to the current frame, and a solid-line box indicates a UI control that does not change in the next frame relative to the current frame. In other words, the UI control that changes in the next frame relative to the current frame includes the first column 10-1 and the fifth column 10-7.
(b) in FIG. 6 shows a decision tree (decision tree, DL Tree) corresponding to the control tree shown in (a) in FIG. 6. GL drawing instructions of unchanged UI controls are uniformly stored in an element. For example, GL drawing instructions respectively corresponding to View 10-2, View 10-3, View 10-4, View 10-5, View 10-6, View 10-21, View 10-22, View 10-23, View 10-31, View 10-32, View 10-33, View 10-34, View 10-35, and View 10-36 that are shown in (a) in FIG. 6 are uniformly stored in a bitmap redrawing element; and a GL drawing instruction of each changed UI control is separately stored in a corresponding element. For example, a GL drawing instruction of the changed View 10 shown in (a) in FIG. 6 is separately stored in a DL10 element, a GL drawing instruction of the changed View 10-1 shown in (a) in FIG. 6 is separately stored in a DL10-1 element, a GL drawing instruction of the changed View 10-11 shown in (a) in FIG. 6 is separately stored in a DL10-11 element, a GL drawing instruction of the changed View 10-7 shown in (a) in FIG. 6 is separately stored in a DL10-7 element, and a GL drawing instruction of the changed View 10-71 shown in (a) in FIG. 6 is separately stored in a DL10-71 element. In this way, when drawing is required, these drawing instructions are submitted to a GPU for execution, so that the GPU draws content corresponding to a specific UI control.

Because of the partial refresh mechanism, the redundant drawing of the control is inevitable. The bitmap buffer mechanism introduces a monitoring mechanism, and if the view tree structure does not change in a same scenario, the content drawn for the unchanged UI control is stored in a bitmap manner. In a rendering and drawing phase, when the view tree is traversed and the unchanged UI control is traversed, the stored drawn content is directly reused. For the control whose UI is changed, the original process is retained, and the drawing instruction is submitted to the GPU for rendering and drawing, to avoid repeated drawing of the unchanged UI control.

When the GPU uses the bitmap drawing (draw bitmap) manner for rendering, drawing efficiency is low and CPU load increases. In addition, in the bitmap buffer technology, there is a redundant blank part that connects boxes in a region that is actually displayed. During rendering of the GPU, a rasterized part increases, and power consumption of the GPU increases.

In addition, for a control view tree with complex breadth and depth, extra large memory needs to be introduced to store bitmaps. As a result, read and write rates of the memory decrease and resource load of the memory increases.

Therefore, embodiments of this application provide an interface rendering method. In the method, a collected target region (which may also be referred to as a dirty region) one-to-one corresponds to a change control. In this way, in a process of rendering a next frame, only a control that is in a current frame and that intersects each target region needs to be rendered, thereby reducing redundant drawing of a UI control, reducing load of an electronic device, further reducing power consumption of the electronic device, and improving user experience.

The interface rendering method provided in embodiments of this application may be applied to the electronic device 100 shown in FIG. 1 or FIG. 2.

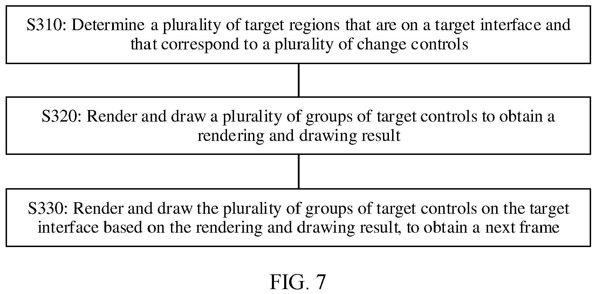

FIG. 7 is an example flowchart of an interface rendering method 300 according to an embodiment of this application.

As shown in FIG. 7, the method 300 includes S310 to S330. The following describes S310 to S330 in detail.

S310: Determine a plurality of target regions that are on a target interface and that correspond to a plurality of change controls.

The change control includes a control that changes in a next frame of the target interface relative to a current frame.

The target region is a minimum bounding rectangular region of a region occupied by the change control on the target interface. In other words, the target regions one-to-one correspond to the change controls, that is, one change control corresponds to one target region.

The change control may be understood as a control whose attribute or content changes. For example, the attribute may include transparency, a color, a size, a background, a location, and the like of the control. For example, the content may include text information, an image, a graph, and the like displayed on the control.

A quantity and locations of controls on the target interface are not limited in this embodiment of this application.

For example, the target interface may display but is not limited to displaying a page or a web page of a consumer application, a page of a video application (for example, a video playing page, a video call page, or a home page of the video application), a page of a music application, a page of a short video social application, a page of an information application, and the like.

For example, S310 specifically includes S311 to S313. The following describes S311 to S313 in detail.

S311: Add a new array for a node of each UI control, where the array is used to record and manage a target region reported by a child node of the node of the UI control.

S312: An electronic device traverses each control in a control tree of the target interface, and if a current UI control changes (that is, the current UI control is the change control), obtains attribute information of a target region, and stores the attribute information in an array (an array newly added to the parent node) of a parent node of a node of the current UI control. The attribute information of the target region indicates a size and a location of the target region.

Usually, the target region is a rectangular region enclosed by a minimum horizontal coordinate, a maximum horizontal coordinate, a minimum vertical coordinate, and a maximum vertical coordinate of the region occupied by the change control.

In an example, if the region occupied by the change control on the target interface is a rectangular region, the target region is the region occupied by the change control.

For example, as shown in FIG. 5, if the text information "xx" in the fifth column 10-7 changes in the next frame, the fifth column 10-7 may be considered as a change control. Because the region occupied by the fifth column 10-7 on the display interface 10 is a rectangular region, a target region on the display interface 10 is the region occupied by the fifth column 10-7.

In another example, if the region occupied by the change control on the target interface is not a rectangular region, the target region is the minimum bounding rectangular region of the region occupied by the change control on the target interface.

For example, as shown in FIG. 5, if the text information "xxxxxxx" in the first column 10-1 changes in the next frame, the first column 10-1 may be considered as a change control. Because the region occupied by the first column 10-1 on the display interface 10 is a rounded rectangular region, a target region on the display interface 10 is a minimum bounding rectangular region of the rounded rectangular region occupied by the first column 10-1 on the display interface 10.

In an example, the attribute information of the target region includes coordinates of diagonal vertices of the target region. In another example, the attribute information of the target region includes coordinates of a vertex of the target region, and a length and a width of the target region. A manner in which the attribute information of the target region indicates the size and the location of the target region is not limited in this embodiment of this application.

It should be noted that the coordinates included in the attribute information of the target region are absolute coordinates in a screen coordinate system of the electronic device. Usually, coordinates of an upper left vertex of the screen are (0, 0).

In a process of obtaining the attribute information of the target region, if coordinates of the target region relative to the parent node are obtained, the coordinates of the target region relative to the parent node need to be converted into coordinates of the target region relative to the screen (root node).

S313: After current nodes are traversed, clear content of arrays (other than the root node) in the current nodes.

In this way, through S311 to S313, after the node of each control in the control tree is traversed, the finally collected attribute information of the target region corresponding to each change control is stored under the root node. In this way, S310 is implemented.

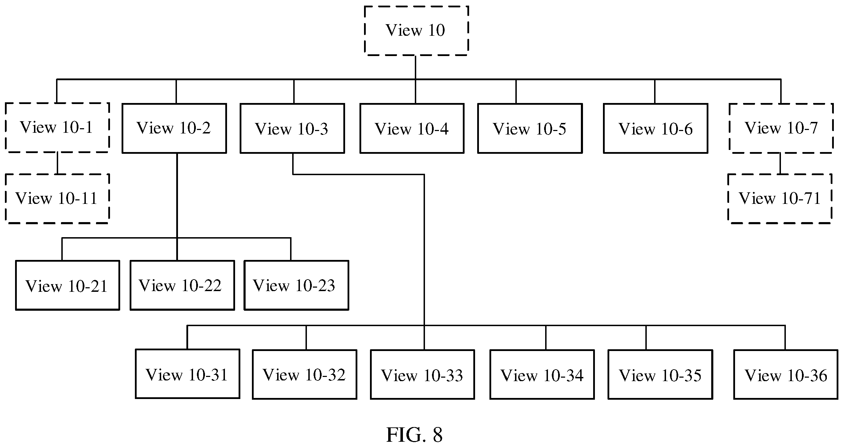

As shown in FIG. 8, in a process of traversing each control in the control tree of the display interface 10, because View 10-11 is the change control, when View 10-11 is traversed, attribute information of View 10-11 is stored in an array of the parent node View 10-1 of View 10-11, and then an array of View 10-11 is cleared. The parent node View 10-1 transfers the attribute information of View 10-11 stored in the array of View 10-1 to the root node View 10, and then clears the array of View 10-1. The root node View 10 stores the attribute information of View 10-11 in an array of View 10.

In addition, because View 10-71 is also the change control, when View 10-71 is traversed, attribute information of View 10-71 is stored in an array of the parent node View 10-7 of View 10-71, and then an array of View 10-71 is cleared. The parent node View 10-7 transfers the attribute information of View 10-71 stored in the array of View 10-7 to the root node View 10, and then clears the array of View 10-7. The root node View 10 stores the attribute information of View 10-71 in the array of View 10.

In this way, the array of the root node View 10 collects attribute information of all change controls, that is, View 10 collects all independent target regions (the attribute information of View 10-11 and the attribute information of View 10-71).

Optionally, in some embodiments, the method 200 may further include S340, and S340 is performed between S310 and S320.

S340: Determine that the plurality of target regions meet a separate rendering and drawing condition.

In an example, the separate rendering and drawing condition includes that a sum of areas of the plurality of target regions is not equal to an area of a common region, and the common region is a minimum bounding rectangular region of a region occupied by the plurality of change controls on the target interface. In this way, if the sum of the areas of the plurality of target regions determined in S310 is not equal to the area of the common region, the plurality of target regions meet the separate rendering and drawing condition; or if the sum of the areas of the plurality of target regions determined in S310 is equal to the area of the common area, the plurality of target regions do not meet the separate rendering and drawing condition.

In another example, the separate rendering and drawing condition includes that the sum of the areas of the plurality of target regions is less than an area of the target interface. In this way, if the plurality of target regions determined in S310 do not fully occupy the target interface, that is, the plurality of target regions determined in S310 are some regions of a region occupied by the target interface on the electronic device, it may be considered that there is no need to redraw all UI controls on the target interface, and the plurality of target regions meet the separate rendering and drawing condition; or if the plurality of target regions determined in S310 fully occupy the target interface, that is, the plurality of target regions determined in S310 are a region occupied by the target interface on the electronic device, in this case, it may be considered that all UI controls need to be redrawn on the target interface, and the plurality of target regions do not meet the separate rendering and drawing condition.

For example, whether the plurality of target regions fully occupy the target interface may be determined based on locations and sizes of the plurality of target regions.

In still another example, the separate rendering and drawing condition includes that a sum of areas of the plurality of target regions is not equal to an area of a common region, and the sum of the areas of the plurality of target regions is less than an area of the target interface.

In still another example, the separate rendering and drawing condition includes that a sum of areas of the plurality of target regions is less than a first threshold. In this way, if the sum of the areas of the plurality of target regions is less than the first threshold, the plurality of target regions meet the separate rendering and drawing condition. If the sum of the areas of the plurality of target regions is greater than or equal to the first threshold, the plurality of target regions do not meet the separate rendering and drawing condition.

A specific value of the first threshold is not limited in this embodiment of this application. For example, the first threshold may be greater than or equal to 90% of the area of the target interface.

In still another example, the separate rendering and drawing condition includes that no coincident boundary exists in the plurality of target regions. In this way, if the coincident boundary exists in the plurality of target regions, the plurality of target regions meet the separate rendering and drawing condition. If no coincident boundary exists in the plurality of target regions, the plurality of target regions do not meet the separate rendering and drawing condition.

That the coincident boundary exists in the plurality of target regions may be understood as that the plurality of target regions are adjacent without gaps.

It should be noted that, if the plurality of target regions do not meet the separate rendering and drawing condition, a control that intersects the large dirty region (a minimum bounding rectangular region of the plurality of target regions) may be rendered and drawn by using the foregoing solution of redrawing the large dirty region. Details are not described herein again.

When the plurality of target regions meet the separate rendering and drawing condition based on an attribute of the target region, the target interface is redrawn by using the method 200 provided in this application, and only the control that intersects each target region needs to be rendered, thereby reducing redundant drawing of the control and unnecessary resource overheads, further reducing load and power consumption of the electronic device, and improving user experience.

When the plurality of target regions do not meet the separate rendering and drawing condition based on an attribute of the target region, the target interface is redrawn based on the large dirty region formed by the minimum bounding rectangular region of the plurality of target regions, and the target interface is no longer redrawn by using the method 200 provided in this application. In this way, the redundant drawing of the control and the unnecessary resource overheads are not increased, and further the load and the power consumption of the electronic device are not increased. In addition, compared with the method 200 provided in this application, rendering of the large dirty region can be completed at a time, and controls in the plurality of target regions do not need to be rendered for a plurality of times, thereby reducing overheads of rendering the target region and improving user experience.

Optionally, in some embodiments, between S310 and S340, the method 300 may further include S350.

S350: Remove a same target region from the plurality of target regions. The same target region may be understood as that locations and sizes of the target regions are the same.

Through S350, an overlapping target region (a same target region) is removed from the plurality of target regions. In this way, it can be ensured that the collected target regions are unique and do not intersect each other.

It should be noted that, if the method 300 includes S350, the plurality of target regions in S320 to S350 are a plurality of target regions obtained by removing the same target region from the plurality of target regions.

Optionally, in some embodiments, between S310 and S340, the method 300 further includes S360, that is, determine whether a historical target region result needs to be accumulated.

Whether the historical target region result needs to be accumulated mainly depends on a working mechanism of a buffer (buffer) of the electronic device.

If the working mechanism of the buffer is a buffer rotation mechanism, the historical target region result needs to be accumulated. If the working mechanism of the buffer is not the buffer rotation mechanism, the historical target region result does not need to be accumulated.

When it is determined that the historical target region result needs to be accumulated in S360, to obtain a buffer of the target region of the next frame, a target region of a historical frame (namely, a frame before the next frame) obtained by another buffer needs to be obtained, thereby preventing the target region of the historical frame from affecting the target region of the next frame.

For example, the buffer rotation mechanism may include a dual-buffer rotation mechanism, a triple-buffer rotation mechanism, a quad-buffer rotation mechanism, and the like. The buffer rotation mechanism is not limited in embodiments of this application.

In an example, if the buffer rotation mechanism of the electronic device is the dual-buffer rotation mechanism, the electronic device uses two buffers to obtain target regions in turn.

For example, a buffer 1 is configured to obtain a target region of a first frame, a buffer 2 is configured to obtain a target region of a second frame, the buffer 1 is configured to obtain a target region of a third frame, the buffer 2 is configured to obtain a target region of a fourth frame, ..., the buffer 1 is configured to obtain a target region of an m1^{th} frame, and the buffer 2 is configured to obtain a target region of an m2^{th} frame (m1 is an odd number and m2 is an even number).

In another example, if the buffer rotation mechanism of the electronic device is the triple-buffer rotation mechanism, the electronic device uses three buffers to obtain target regions in turn.

For example, a buffer 1 is configured to obtain a target region of a first frame, a buffer 2 is configured to obtain a target region of a second frame, a buffer 3 is configured to obtain a target region of a third frame, the buffer 1 is configured to obtain a target region of a fourth frame, the buffer 2 is configured to obtain a target region of a fifth frame, the buffer 3 is configured to obtain a target region of a sixth frame, ..., the buffer 1 is configured to obtain a target region of a (1+3×n)^{th} frame, the buffer 2 is configured to obtain a target region of a (2+3×n)^{th} frame, and the buffer 3 is configured to obtain a target region of a (3+3×n)^{th} frame (n is an integer greater than or equal to 0).

It should be noted that if the method 300 includes S350, S360 is performed after S350. In addition, after S360, S350 further needs to be performed again.

S320: Render and draw a plurality of groups of target controls to obtain a rendering and drawing result.

The target control includes a control that is in the current frame and that intersects the target region. In other words, one target region corresponds to one group of target controls.

One group of target controls includes at least one target control.

Regardless of whether the target region is the region occupied by the change control or the target region is the minimum bounding rectangular region of the region occupied by the change control, there are two cases in which the control that is in the current frame and that intersects the target region is the target control: One is that the control that is in the current frame and that intersects the target region has only the change control and no another control; and the other is that the control that is in the current frame and that intersects the target region further includes another control in addition to the change control.

For example, in the another control, there is a control whose parent node is not the same as that of the change control, or there is a control whose parent node is the same as that of the change control. This is not limited in this application.

The another control may be a global control on the target interface (a region occupied by the global control is the region occupied by the target interface), or may not be a global control on the target interface. This is not limited in this application.

For example, the global control may be a static control, for example, a global background control.

For example, if the target region is the minimum bounding rectangular region of the rounded rectangular region occupied by the first column 10-1 shown in FIG. 5, and the target control includes the first column 10-1 (an example of the change control) and a global background control (an example of the another control), in addition to the rounded rectangular region occupied by the first column 10-1, the target region further includes a region other than the rounded rectangular region occupied by the first column 10-1 in the minimum bounding rectangular region of the rounded rectangular region occupied by the first column 10-1.

Optionally, if a region occupied by the another control on the target interface is within the minimum bounding rectangular region of the plurality of target regions, the another control may be all redrawn. If the region occupied by the another control on the target interface is not within the minimum bounding rectangular region of the plurality of target regions, partial redrawing may be performed on a region that is of the another control and that is located within the minimum bounding rectangular region of the plurality of target regions.

For example, as shown in FIG. 5, if the text information "xxxxxxx" in the first column 10-1 and the text information "xx" in the fifth column 10-7 change in the next frame, there are two target regions, and one is the region occupied by the fifth column 10-7, and the other is the minimum bounding rectangular region of the rounded rectangular region occupied by the first column 10-1 on the display interface 10. In this case, the minimum bounding rectangular region formed by the region occupied by the fifth column 10-7 and the minimum bounding rectangular region of the rounded rectangular region occupied by the first column 10-1 on the display interface 10 is the region 10-8. Controls that intersect the region occupied by the fifth column 10-7 include the fifth column 10-7 (an example of the target control), the third column 10-5 (another example of the target control), and a global control (still another example of the target control) corresponding to the display interface 10, the third column 10-5 is in the region 10-8, and the global control corresponding to the display interface 10 is not in the region 10-8. Therefore, in S320, the fifth column 10-7 and the third column 10-5 may be all rendered and drawn, and partial rendering and drawing is performed on a region in which the global control is located in the region 10-8.

For another example, as shown in FIG. 5, if the fourth column 10-6 and the text information "xx" in the fifth column 10-7 change in the next frame, there are two target regions, and one is a region occupied by the fourth column 10-6, and the other is the fifth column 10-7. In this case, a minimum bounding rectangular region formed by the region occupied by the fifth column 10-7 and the region occupied by the fourth column 10-6 is a region 10-9. The controls that intersect the region occupied by the fifth column 10-7 include the fifth column 10-7 (an example of the target control) and the third column 10-5 (another example of the target control), and neither the global control corresponding to the display interface 10 nor the third column 10-5 is in the region 10-9. Therefore, in S320, the fifth column 10-7 may be all rendered and drawn, a region that is of the fifth column 10-7 and that is located in the region 10-9 is partially rendered and drawn, and a region that is of the global control and that is located in the region 10-9 is partially rendered and drawn.

The control that is on the target interface and that intersects a location of each target region is rendered and drawn to obtain the rendering and drawing result. In addition, a control that is on the target interface and that does not intersect the location of the target region is not processed.

It should be understood that the rendering and drawing result in S320 is a drawing instruction.

S330: Render and draw the plurality of groups of target controls on the target interface based on the rendering and drawing result, to obtain the next frame.

For example, if the electronic device includes a CPU and a GPU, the CPU performs S310, S320, and S340 to S360, and the GPU performs S330. After performing S320, the CPU needs to send the rendering and drawing result to the GPU, so that the GPU performs S330.

If a buffer for implementing display also uses a rotation mechanism, usually, the buffer for implementing display can ensure that content for display is continuous. Therefore, before performing S340, the buffer for implementing display learns of the historical target region. In this case, in S340, a rendering and drawing result that is in the rendering and drawing result and that is related to the target region obtained in S310 needs to be extracted, and the target regions obtained in S310 (or S350) are displayed one by one based on the extracted rendering and drawing result, to refresh the current frame of the target interface to the next frame.

For example, the electronic device may include two processes: a GUI application main process and a rendering process.

The GUI application main process manages all UI controls of the target interface, measures geometric locations and sizes of the UI controls, and checks whether the UI controls change, that is, the GUI application main process obtains the attribute information (sizes and locations) of the change controls.

The rendering process obtains the attribute information of the change controls from the GUI application main process, determines the plurality of target regions based on the attribute information of the plurality of change controls, determines that the plurality of target regions meet the separate rendering and drawing condition, renders and draws the control that is in the current frame and that intersects each target region, to obtain the rendering and drawing result, and renders and draws the plurality of groups of target controls (controls that intersect the target region) on the target interface based on the rendering and drawing result, to obtain the next frame.

For example, the electronic device may include a process communication unit, a target region calculation unit, a rendering execution unit, a GUI instruction drawing unit, and a composition and display unit. The rendering process obtains the attribute information of the plurality of change controls from the GUI application main process by using the process communication unit, and transmits the attribute information of the plurality of change controls to the target region calculation unit. The target region calculation unit calculates the plurality of target regions based on the attribute information of the plurality of change controls, and transmits the plurality of target regions to the rendering execution unit. When determining that the plurality of target regions meet the separate rendering and drawing condition, the rendering execution unit renders and draws the control that is in the current frame and intersects each target region, to obtain the rendering and drawing result, and transmits the rendering and drawing result to the GUI instruction drawing unit. The GUI instruction drawing unit generates a GUI drawing instruction based on the rendering and drawing result, and transmits the GUI drawing instruction to the composition and display unit. The composition and display unit renders and draws the plurality of groups of target controls (controls that intersect the target region) in the current frame on the target interface based on the GUI drawing instruction, to obtain the next frame.

Table 1 below lists power consumption of the electronic device and a power consumption benefit of Solution 2 compared with that of Solution 1 in a process of rendering, based on Solution 1 and Solution 2, interfaces (namely, target interfaces) displayed by eight applications of the electronic device. In Solution 1 the minimum bounding rectangle of all the target regions is used as the large dirty region based on the large dirty region partial refresh manner, and the large dirty region is redrawn (in an existing solution). Solution 2 is the method 200 provided in embodiments of this application.

**Table 1**

| No. | Application | Test scenario | Power consumption of Solution 1 (unit: mA) | Power consumption of Solution 2 (unit: mA) | Power consumption benefit of Solution 2 compared with that of Solution 1 (unit: mA) |
|---|---|---|---|---|---|
| 1 | Jingdong | Home page | 581.03 | 557.92 | 23.11 |
| 2 | Himalaya FM | Song looping | 669.23 | 651.83 | 17.40 |
| 3 | TikTok | Favorites page | 478.50 | 462.61 | 15.89 |
| 4 | Ele.me | Home page | 686.01 | 673.00 | 13.01 |
| 5 | NetEase Cloud Music | Hot songs | 300.15 | 288.18 | 11.97 |
| 6 | Dongchedi | Home page | 602.57 | 591.10 | 11.47 |
| 7 | KE Holdings | Live room viewing | 614.98 | 607.59 | 7.39 |
| 8 | Dianping | Performance home page | 586.13 | 578.97 | 7.16 |

It can be learned from Table 1 that, compared with that of Solution 1, in Solution 2, the power consumption of the electronic device is lower in the process of rendering the interface displayed by the application of the electronic device.

In addition, through testing, in a process of obtaining the independent target region based on Solution 2, the power consumption of the electronic device fluctuates within ±1 mA to 2 mA. Therefore, the resource overheads of the electronic device are also low.

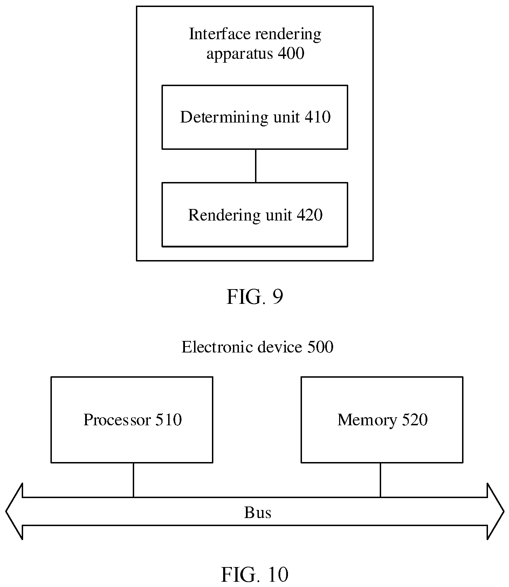

The following describes in detail the electronic device provided in embodiments of this application with reference to FIG. 9 and FIG. 10.

FIG. 9 is a diagram of a structure of an example of an interface rendering apparatus 400 according to an embodiment of this application.

For example, the interface rendering apparatus 400 may be the electronic device 100 shown in FIG. 1 or FIG. 2, or the interface rendering apparatus 400 may be a chip or a circuit in the electronic device 100 shown in FIG. 1 or FIG. 2. This is not limited in this application.

For example, as shown in FIG. 9, the interface rendering apparatus 400 includes a determining unit 410 and a rendering unit 420. The determining unit 410 is configured to determine a plurality of target regions that are on a target interface and that correspond to a plurality of change controls, where the change control includes a control that changes in a next frame of the target interface relative to a current frame, and the target region is a minimum bounding rectangular region of a region occupied by the change control on the target interface. The rendering unit 420 is configured to: render and draw a plurality of groups of target controls to obtain a rendering and drawing result, where the target control includes a control that is in the current frame and that intersects the target region; and render and draw the plurality of groups of target controls on the target interface based on the rendering and drawing result, to obtain the next frame.

Optionally, a sum of areas of the plurality of target regions is not equal to an area of a common region, and the common region is a minimum bounding rectangular region of a region occupied by the plurality of change controls on the target interface.

Optionally, the sum of the areas of the plurality of target regions is less than an area of the target interface.

Optionally, the rendering unit 420 is further specifically configured to: when the sum of the areas of the plurality of target regions is less than a first threshold, render and draw the plurality of groups of target controls.

Optionally, one group of target controls includes one or more target controls.

Optionally, the target control includes a control that is in the current frame and that intersects a target region obtained through removing, and the interface rendering apparatus 400 may further include a removing unit, configured to: before the plurality of groups of target controls are rendered and drawn to obtain the rendering and drawing result, remove a same target region from the plurality of target regions.

FIG. 10 is a diagram of a structure of another example of an electronic device 500 according to an embodiment of this application.

As shown in FIG. 10, the electronic device 500 includes one or more processors 510 and one or more memories 520. The one or more memories 520 store one or more computer programs, and the one or more computer programs include instructions. When the instructions are run by the one or more processors 510, the electronic device 500 is enabled to perform the technical solution performed by the first communication device in the foregoing embodiments, or the apparatus 500 is enabled to perform the method 200.

An embodiment of this application provides a computer program product. When the computer program product is run on an electronic device, the electronic device is enabled to perform the method 200. An implementation principle and technical effect thereof are similar to those of embodiments related to the method 200. Details are not described herein again.

An embodiment of this application provides a computer-readable storage medium. The computer-readable storage medium includes instructions. When the instructions are run on an electronic device, the electronic device is enabled to perform the method 200. An implementation principle and technical effect thereof are similar. Details are not described herein again.

An embodiment of this application provides a chip. The chip is configured to execute instructions, and when the chip runs, the method 200 is performed. An implementation principle and technical effect thereof are similar. Details are not described herein again.

A person of ordinary skill in the art may be aware that units and algorithm steps described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An interface rendering method, wherein the method comprises:
determining a plurality of target regions that are on a target interface and that correspond to a plurality of change controls, wherein the change control comprises a control that changes in a next frame of the target interface relative to a current frame, and the target region is a minimum bounding rectangular region of a region occupied by the change control on the target interface;
rendering and drawing a plurality of groups of target controls to obtain a rendering and drawing result, wherein the target control comprises a control that is in the current frame and that intersects the target region; and
rendering and drawing the plurality of groups of target controls on the target interface based on the rendering and drawing result, to obtain the next frame.

2. The method according to claim 1, wherein a sum of areas of the plurality of target regions is not equal to an area of a common region, and the common region is a minimum bounding rectangular region of a region occupied by the plurality of change controls on the target interface.

3. The method according to claim 1 or 2, wherein the sum of the areas of the plurality of target regions is less than an area of the target interface.

4. The method according to claim 1, wherein the rendering and drawing a plurality of groups of target controls comprises:
when a sum of areas of the plurality of target regions is less than a first threshold, rendering and drawing the plurality of groups of target controls.

5. The method according to any one of claims 1 to 4, wherein one group of target controls comprises one or more target controls.

6. The method according to any one of claims 1 to 5, wherein the target control comprises a control that is in the current frame and that intersects a target region obtained through removing, and before the rendering and drawing a plurality of groups of target controls to obtain a rendering and drawing result, the method further comprises:
removing a same target region from the plurality of target regions.

7. The method according to any one of claims 1 to 5, wherein the determining a plurality of target regions that are on a target interface and that correspond to a plurality of change controls comprises:
adding a new array for a node of each control in a control tree of the target interface, to record and manage a target region reported by a child node of the control;
traversing each control to obtain attribute information of the target region corresponding to the change control in the control; and
storing the attribute information in an array corresponding to a root node of the change control, and clearing an array corresponding to a node other than the array corresponding to the root node, wherein
the array corresponding to the root node comprises the target regions corresponding to all the change controls on the target interface.

8. An interface rendering apparatus, wherein the apparatus comprises:
a determining unit, configured to determine a plurality of target regions that are on a target interface and that correspond to a plurality of change controls, wherein the change control comprises a control that changes in a next frame of the target interface relative to a current frame, and the target region is a minimum bounding rectangular region of a region occupied by the change control on the target interface; and
a rendering unit, configured to render and draw a plurality of groups of target controls to obtain a rendering and drawing result, wherein the target control comprises a control that is in the current frame and that intersects the target region, wherein
the rendering unit is further configured to render and draw the plurality of groups of target controls on the target interface based on the rendering and drawing result, to obtain the next frame.

9. The apparatus according to claim 8, wherein a sum of areas of the plurality of target regions is not equal to an area of a common region, and the common region is a minimum bounding rectangular region of a region occupied by the plurality of change controls on the target interface.

10. The apparatus according to claim 8 or 9, wherein the sum of the areas of the plurality of target regions is less than an area of the target interface.

11. The apparatus according to claim 8, wherein the rendering unit is further specifically configured to: when a sum of areas of the plurality of target regions is less than a first threshold, render and draw the plurality of groups of target controls.

12. The apparatus according to any one of claims 8 to 11, wherein one group of target controls comprises one or more target controls.

13. The apparatus according to any one of claims 8 to 12, wherein the target control comprises a control that is in the current frame and that intersects a target region obtained through removing, and before rendering and drawing a plurality of groups of target controls to obtain a rendering and drawing result, the rendering unit is further configured to:
remove a same target region from the plurality of target regions.

14. An electronic device, wherein the electronic device comprises a central processing unit CPU, and the CPU is configured to:
determine a plurality of target regions that are on a target interface and that correspond to a plurality of change controls, wherein the change control comprises a control that changes in a next frame of the target interface relative to a current frame, and the target region is a minimum bounding rectangular region of a region occupied by the change control on the target interface; and
render and draw a plurality of groups of target controls to obtain a rendering and drawing result, wherein the target control comprises a control that is in the current frame and that intersects the target region.

15. The electronic device according to claim 14, wherein the electronic device further comprises a graphics processing unit GPU;
the CPU is further configured to send the rendering and drawing result to the GPU; and
the GPU is configured to render and draw the plurality of groups of target controls on the target interface based on the rendering and drawing result, to obtain the next frame.

16. The electronic device according to claim 14 or 15, wherein a sum of areas of the plurality of target regions is not equal to an area of a common region, and the common region is a minimum bounding rectangular region of a region occupied by the plurality of change controls on the target interface.

17. The electronic device according to any one of claims 14 to 16, wherein the sum of the areas of the plurality of target regions is less than an area of the target interface.

18. The electronic device according to claim 14 or 15, wherein the rendering unit is further specifically configured to: when a sum of areas of the plurality of target regions is less than a first threshold, render and draw the plurality of groups of target controls.

19. The electronic device according to any one of claims 14 to 18, wherein one group of target controls comprises one or more target controls.

20. The electronic device according to any one of claims 14 to 19, wherein the target control comprises a control that is in the current frame and that intersects a target region obtained through removing, and the CPU is further configured to:
remove a same target region from the plurality of target regions.

21. An electronic device, comprising a processor, configured to execute a computer program stored in a memory, to enable the electronic device to perform the method according to any one of claims 1 to 7.

22. The electronic device according to claim 21, wherein the electronic device further comprises the memory and/or a communication interface, and the communication interface is coupled to the processor; and
the communication interface is configured to input and/or output information.

23. A computer-readable storage medium, wherein the computer-readable storage medium stores a computer program, and when the computer program is run on a computer, the computer is enabled to perform the method according to any one of claims 1 to 7.

24. A chip, comprising at least one processor and an interface circuit, wherein the interface circuit is configured to provide program instructions or data for the at least one processor, and the at least one processor is configured to execute the program instructions, to implement the method according to any one of claims 1 to 7.

25. A computer program product, wherein the computer program product comprises instructions for performing the method according to any one of claims 1 to 7.
